# EUROPEAN PATENT SPECIFICATION

(11) **EP 4 281 374 B1**
(45) Date of publication and mention of the grant of the patent: **23.09.2026**
(21) Application number: 22703774.4
(22) Date of filing: 21.01.2022
(51) Int. Cl.: B64F 1/00, B64F 1/30, E04F 10/04, E04H 15/08, B64C 1/14

(54) **PLANE DOOR FRAME CANOPY**
ÜBERDACHUNG FÜR EINEN EBENEN TÜRRAHMEN
AUVENT PLAT DE CADRE DE PORTE

(30) Priority: 21.01.2021 US 202163140007 P
(43) Date of publication of application: 29.11.2023
(73) Proprietor: Blumenfeld, Edward, Robert, Syosset, NY 11791-6012 (US)
(72) Inventor: Blumenfeld, Edward, Robert, Syosset, NY 11791-6012 (US)
(74) Representative: LKGLOBAL Partnerschaftsgesellschaft mbB
(86) International application number: PCT/US2022/013298
(87) International publication number: WO 2022/159691

(56) References cited:
- CN-A- 107 054 619
- DE-A1- 10 311 595
- FR-A- 682 440
- FR-A1- 2 456 188
- GB-A- 2 529 701
- GB-A- 522 459
- US-A- 4 422 491

## Description

### BACKGROUND

Modern modes of transportation, particularly enclosed vehicles, provide the advantage of protecting passengers from the weather. However, larger vehicles, such as planes or jets, must in many circumstances be boarded outdoors, exposing passengers and flight crew, for example, to the weather and creating the potential for precipitation to enter the vehicle through an open door. Such exposure can damage the interior of the vehicle and can cause corrosion around the door frame and/or the mechanical parts coupling the door to the frame which can lead to expensive repairs.

From document FR 682 440 A as well as from document GB 522 459 A, collapsable sun blinds or awnings are known comprising side members, wherein the upper ends of the side members are interconnected by fixed frame member loops formed in hinged sections, and the side members are attached by universal joints, wherein side arms comprise a proximal bar and a distal bar.

Entryways to buildings can avoid such problems by the construction of adjoining booths or similar structures, for example. Several factors make permanent additions to the fuselage of a plane or jet an impractical solution to the issue of weather infiltration.

### BRIEF SUMMARY

Problems known from the prior art are solved or at least mitigated by the removable canopy according to claim 1. Preferred embodiments are defined by the dependent claims. In general, a canopy is provided with a linkage enabling the canopy to reversibly transition between a folded configuration and an extended configuration. The canopy includes a brace with features enabling the brace to be removably mountable to a surface. The canopy also includes a cross bar at or near an opposite end of the linkage from the brace. The linkage is configured such that the cross bar moves away from the brace in the transition from the folded configuration to the extended configuration. The canopy may also include a moisture resistant sheet connected across respective lengths of the brace and the cross bar. The brace and cross bar may both be arcuate and convexly shaped such that the sheet is pulled tight to the shape of a partial cylinder to shed precipitation to either lateral side of the canopy when the canopy is in the extended configuration.

The folded configuration is wherein a proximal portion of the linkage extends in an opposite direction, from its proximal end to its distal end, from the direction that a distal portion of the linkage extends from its proximal end to its distal end. The linkage may therefore appear to overlap itself from a perspective along which the linkage extends in the extended configuration. The linkage includes two foldable arms. In some embodiments, the linkage may include more than two foldable arms such as four or more foldable arms. The arms include multiple distinct links or bars hingedly connected to one another in series. The cross bar may be connected at or near distal most ends of the arms. The sheet may be connected at its lateral sides to arms of the linkage to prevent precipitation from infiltrating between the sheet and the linkage.

The linkage may comprise a free end. The free end may be nearer to the brace in the folded configuration than in the extended configuration.

The linkage comprises two arms, each connected to the brace at one end.

Each arm comprises a proximal bar connected to the brace at one end and a distal bar rotatable relative to the proximal bar and linked to the brace through the proximal bar

Each arm comprises a middle bar rotatably connected to both the proximal bar and the distal bar.

The cross bar may extend between the two distal bars.

The sheet may be connected to the distal bars and across a length of the cross bar between the distal bars.

The sheet may be connected across a length of the brace between the proximal bars and both the brace and the cross bar may be arcuate in shape.

The canopy may comprise a weather strip extending along the brace. The brace may define an arc projected on a first plane. The weather strip may have arcuate cross sections on radial planes extending through the center of the arc.

The extended configuration may be defined at a position at which the sheet is pulled taut between the brace and the cross bar.

A length of the sheet between the brace and the cross bar may prohibit the linkage from collapsing out of the extended configuration except toward the folded configuration.

The mounting features may be suction cups.

The canopy may include a locking system coupled to either or both of the arms. The arms may each include proximal, middle and distal bars. The locking system may include a cam pivotally connected to a respective one of the middle bars, two pins, and a proximal hoop fixed to the proximal bar and a distal hoop fixed to the distal bar. The pins may be coupled to the cam such that rotation of the cam causes the pins to be either received in or withdrawn from the proximal and distal hoops.

The mounting features may be releasable adhesive elements.

The canopy may comprise handles fixedly connected to the brace.

The sheet may be connected to the midpoint of the linkage.

### BRIEF DESCRIPTION OF THE DRAWINGS

FIG. 1 is an exploded perspective view of a canopy according to an aspect of the present disclosure.
FIG. 2 is a side view of the canopy of FIG. 1 in a folded, collapsed, or closed configuration.
FIG. 3 is a side elevation view of the canopy of FIG. 1 in an intermediate stage of extension or partially extended or open configuration.
FIG. 4 is a side elevation view of the canopy of FIG. 1 in a fully extended, extended or open configuration.
FIG. 5 is an overhead view of the canopy of FIG. 1 in the folded configuration.
FIG. 6 is a front elevation view of the canopy of FIG. 1 in the folded configuration and mounted above an exemplary door.
FIG. 7 is a top plan view of the canopy of FIG. 1 in the extended configuration.
FIG. 8 is a front elevation view of the canopy of FIG. 1 in the extended configuration mounted above the door.
FIG. 9 is a close, exploded view of hinge features of the canopy of FIG. 1.
FIGS. 10A and 10B are front elevation views of the canopy of FIG. 1 mounted to a fuselage of an aircraft in a partially and fully open configuration, respectively.
FIG. 11A is a perspective view of a frame of a canopy according to another aspect of the disclosure in a folded configuration.
FIG. 11B is a side elevation view of an arm of the frame of FIG. 11A in an extended configuration.
FIG. 11C is an enlarged view of a portion of FIG. 11B showing features of a cam.
FIG. 12A is a side elevation view of a frame of a canopy according to another aspect of the disclosure in a partially extended configuration.
FIG. 12B is an opposite side elevation view of the frame of FIG. 12A in progressive states of extension.
FIG. 13 is perspective view of a frame of a canopy according to another aspect of the disclosure in a folded configuration.

### DETAILED DESCRIPTION

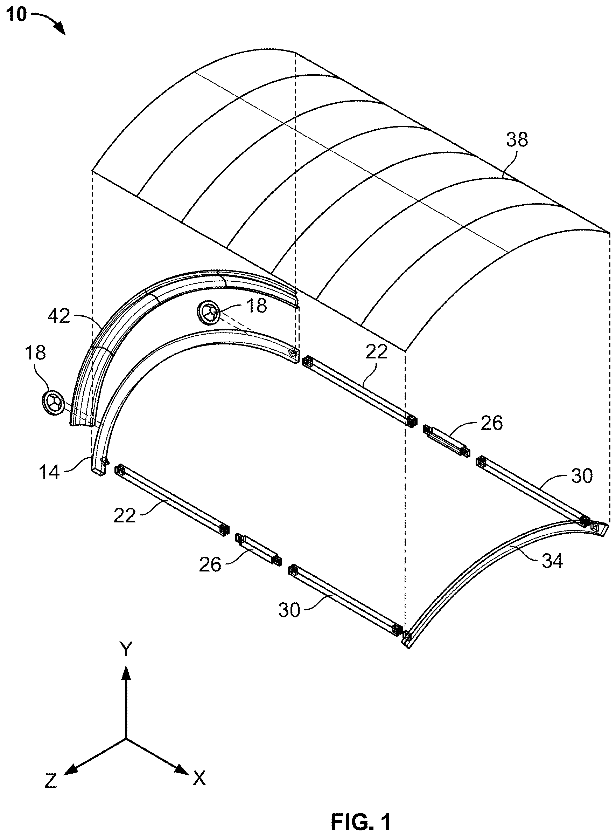

A canopy 10 as shown in FIG. 1 includes a brace 14 mountable to a surface, such as the exterior surface of a vehicle or, more specifically, a plane or jet. The canopy 10 is illustrated relative to a coordinate system that assumes the brace 14 is oriented as it would be on the fuselage of a plane, with X being sideways away from the plane, Y being vertical, and Z being along the length of the plane. The shapes, proportions, relative orientations, and ranges of motion of parts within other canopies 10 may differ from the illustrated example to conform to other vehicles or structures. The brace 14 of the illustrated arrangement is releasably mountable, and includes features for shedding or deflecting rain or precipitation and for supporting an extending linkage. The releasable mounting is provided by releasable mounting features 18, which may be adhesive elements, or more specifically suction cups as illustrated. Two mounting features 18 are shown, though any number may be used as suitable for a chosen type of mounting feature 18 and the weight and dimensions of a particular canopy.

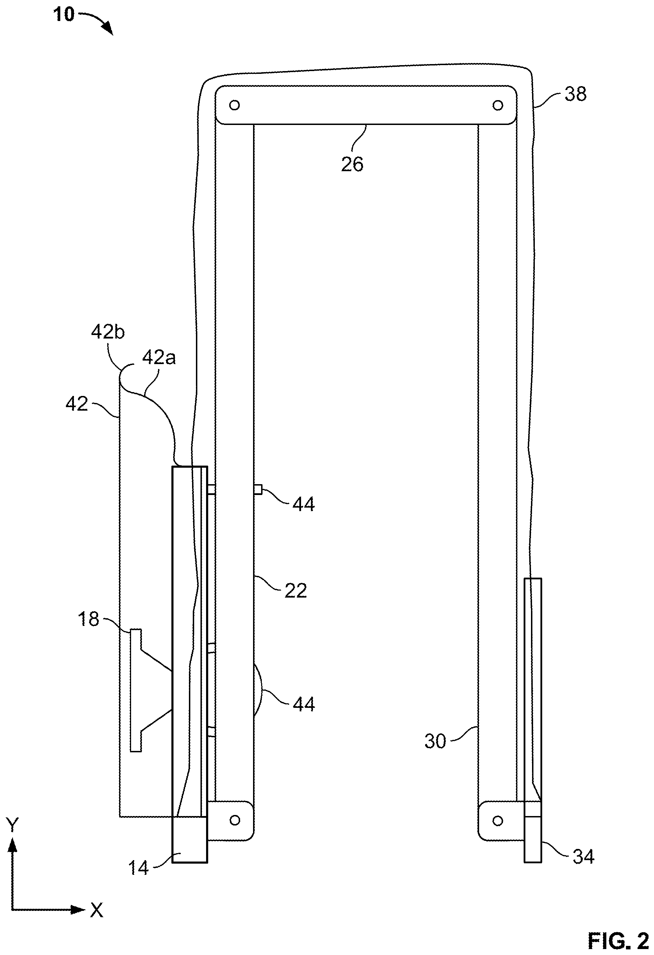

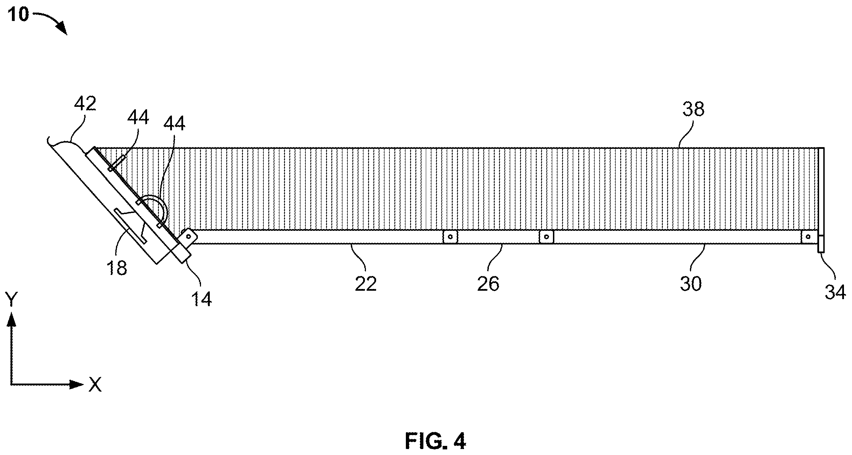

The linkage of the canopy 10 includes two arms, each arm comprising a proximal bar 22 rotatably connected at a proximal end to the brace 14, an intermediate or middle bar 26 rotatably connected at a proximal end to a distal end of the proximal bar, and a distal bar 30 rotatably connected at a proximal end to a distal end of the middle bar 26. The distal ends of the distal bars 30 together define a free end of the linkage. The rotatable connections among the bars 22, 26, 30 in both arms and between the proximal bars 22 and the brace 14 enable the linkage to transition between a folded configuration, shown in FIG. 2 and wherein the free end of the linkage is relatively near to the brace 14, and an extended configuration, shown in FIG. 4 and wherein the free end is relatively distant or far from the brace 14. In alternative arrangements, the linkage may include differing numbers of arms, and the arms may include a differing number of bars, as long as the bars within any arms present enable the linkage overall to expand and fold in generally the manner described and illustrated herein.

The canopy 10 further comprises a cross bar 34 rotatably connected to the distal ends of both distal bars 30, thus at the free end of the linkage, and a sheet 38 connected across a length of the brace 14 and a length of the cross bar 34. The sheet 38 therefore extends along with the linkage. In the illustrated example, the sheet 38 is also connected to the bars 22, 26, 30 of both arms so as to fold along with the linkage as well, though the canopy may be unconnected to the arms in other arrangements. Because the brace 14 and the cross bar 34 are both arcuate in shape and are convex such that an intermediate portion is higher in the Y-direction than the ends of the cross bar 34, the sheet 38 pulls tight to a partial cylinder when the linkage is in the extended configuration to shed precipitation. The tightening of the sheet 38 also cooperates with the direction of gravity to prevent the linkage from rotating beyond the extended configuration.

The brace 14 and bars 22 may be any rigid material, such as plastics or metals, with metals providing strength that may be useful in withstanding repeated use and strong winds, and corrosion resistant metals such as aluminum or stainless steel providing better long term durability in the face of repeated exposure to differing weather and environmental conditions. The sheet may be any durable foldable material resistant to soaking through with water, with treated fabrics, canvases, or tarps being some examples.

The canopy 10 also includes a weather guard 42. The weather guard 42 follows the contour of the brace 14 and also assumes an arcuate shape similar to that of brace 14 and cross bar 34. Turning to FIG. 2, the weather guard 42 extends from the brace 14 away from the linkage to cover the mounting features 18. The weather guard 42 is therefore able to create a seal between the brace 14 and the surface to which the brace 14 is mounted, thus preventing any precipitation from leaking under the canopy 10 between the brace 14 and the surface. The weather guard 42 may be rubber or another flexible polymer material capable of pressing against a surface to prevent the infiltration of precipitation between the guard 42 and the surface without damaging the surface.

The weather guard 42 has a substantially constant cross-sectional shape along its length that includes two adjacent arcs as shown in FIG. 2. The two arcs on the cross-sectional shape of the weather guard 42 provide an external surface of the weather guard 42 with a convex portion 42a adjacent the connection between the weather guard 42, and a concave lip 42b at the free edge of the weather guard 42. The convex portion 42a and the concave lip 42b cooperate to catch and divert precipitation to either lateral side of the canopy 10.

Also visible in FIG. 2 are handles 44 fixedly connected to the brace 14. Three oblong or roughly arcuate handles 44 are connected to the brace 14 in the illustrated arrangement of the canopy 10, but alternative arrangements include handles 44 in various different shapes, quantities, and locations. Handles 44 function to provide a user a means to carry or transport canopy 10 from a storage position to a fixed position on a vehicle and to remove the canopy from the vehicle.

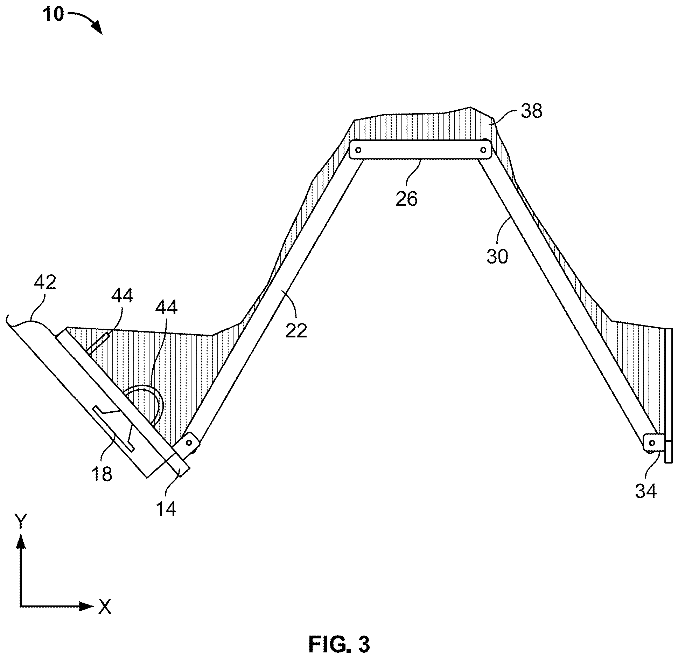

FIGS. 2-4 illustrate extension of the canopy 10 from the folded configuration, shown in FIG. 2, to the extended configuration, shown in FIG. 4, with an intermediate stage shown in FIG. 3. Though the brace 14 is illustrated as straight on the X-Y plane, it may be curved or arcuate on the X-Y plane, for example curving away from the linkage, to conform to whatever surface a specific canopy 14 is adapted for. For example, a brace 14 curved to be concave on the X-Y plane away from the may match the curvature of the fuselage of some aircraft. In such examples, the weather guard 42 would also be curved on the X-Y plane to match the brace 14. Such braces 14 and weather guards 42 would therefore extend along arcs on two perpendicular planes.

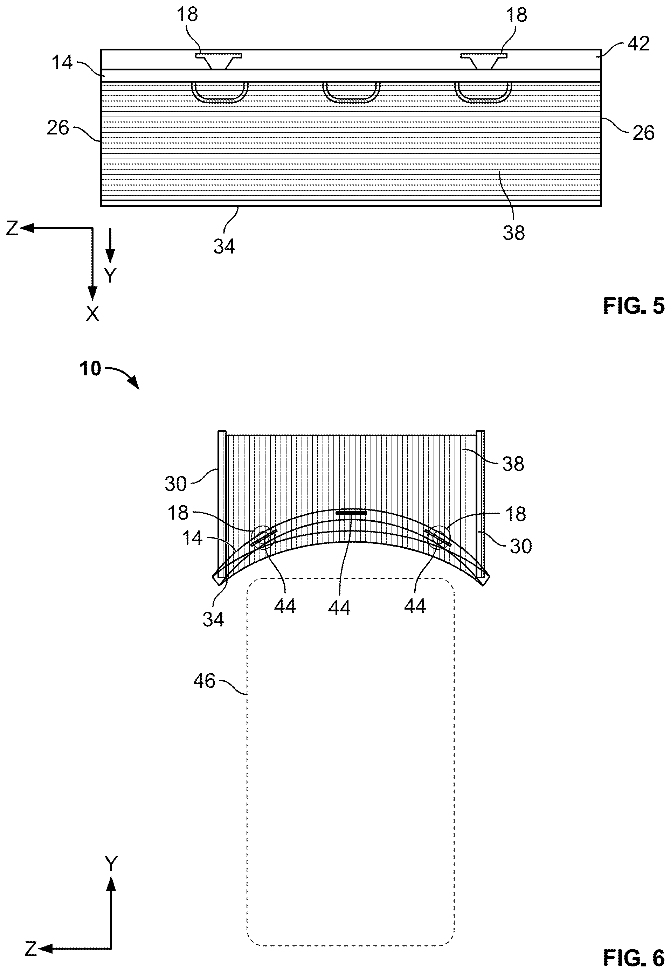

In the folded configuration of the illustrated arrangement, the proximal bar 22 extends upward from a hinged connection to the brace 14, and the distal bar 30 extends back downward from its proximal end. The linkage overall therefore extends primarily upward from the brace 14. With reference to FIG. 5, the linkage in the folded configuration collapses to little more than the length of the middle bar 26, and with reference to FIG. 6, the linkage overlaps itself on a Y-Z plane. In alternative arrangements, the linkage may be configured to extend primarily downward or sideways from the brace 14 in the folded configuration, with the arms still including distal portions extending in an opposite or substantially opposite direction from respective proximal portions, with substantially opposite referring to a difference of more than 90° between two directions. The illustrated arrangement, however, enables gravity to assist in the extension of the canopy 10 from the folded configuration to the expanded configuration and to hold the canopy 10 in the extended configuration in cooperation with tension on the sheet 38. Though not illustrated, the canopy 10 may include a strap, latch, cam arrangement, lock, or other retaining feature to hold the canopy 10 in the folded configuration until released by an operator.

Turning to FIG. 3, the intermediate stage of the transition of the canopy 10 from the folded configuration to the extended configuration includes travel of the cross bar 34 in the X direction to a location that is horizontally further away from the brace 14 in the X direction than the location of the cross bar 34 in the folded configuration as shown in FIG. 2. The process of extending the canopy 10 out of the folded configuration also increases concave-side angles between various elements of the canopy 10. To elaborate, FIG. 2 shows the brace 14, proximal bar 22, distal bar 30, and cross bar 34 extending parallel to one another on the X-Y plane, and the middle bar 26 extending perpendicular to the brace 14, proximal bar 22, distal bar 30, and cross bar 34 on the X-Y plane. Thus, in the folded configuration of the illustrated arrangement, concave-side angles are 0° between the brace 14 and proximal bar 22, between the distal bar 30 and the cross bar 34, between the proximal bar 22 and the distal bar 30, and between the brace 14 and the cross bar 34, and are 90° between the proximal bar 22 and the middle bar 26 and between the middle bar 26 and the distal bar 30, though these angles may vary in other arrangements. In the intermediate stage shown in FIG. 3, concave angles greater than zero are defined between the brace 14 and the proximal bar 22, between the distal bar 30 and the cross bar 34, between the proximal bar 22 and the distal bar 30, and between the brace 14 and the distal bar 34, and concave but obtuse angles are defined between the proximal bar 22 and the middle bar 26 and between the middle bar 26 and the distal bar 30.

As shown in FIG. 4, the extended configuration is therefore defined at the position of the canopy 10 at which the angles between the brace 14 and the proximal bar 22, between the distal bar 30 and the cross bar 34, between the proximal bar 22 and the distal bar 30, between the brace 14 and the cross bar 34, between the proximal bar 22 and the middle bar 26, and between the middle bar 26 and the distal bar 30 are each at the greatest possible value on the side that is concave between that respective pair of elements when the canopy 10 is in the folded position. Specifically, a concave-side angle greater than zero is defined between the brace 14 and the cross bar 34, an obtuse concave side angle is defined between the brace 14 and the proximal bar 22, 180° angles are defined between each of the proximal bar 22, middle bar 26, and distal bar 30, and a right angle is defined on the concave side between the distal bar 30 and the cross bar 34. Tension on the sheet 38 holds the sheet 38 in a partial cylindrical shape as shown in FIG. 1 and prevents these pairs of elements from extending beyond the foregoing angles. However, in alternative arrangements, the hinges between these elements may have features to limit rotation beyond the extended configuration, and the canopy 10 may include additional retaining features such as straps, latches, cam arrangements, or locks to maintain the expanded configuration until released by an operator.

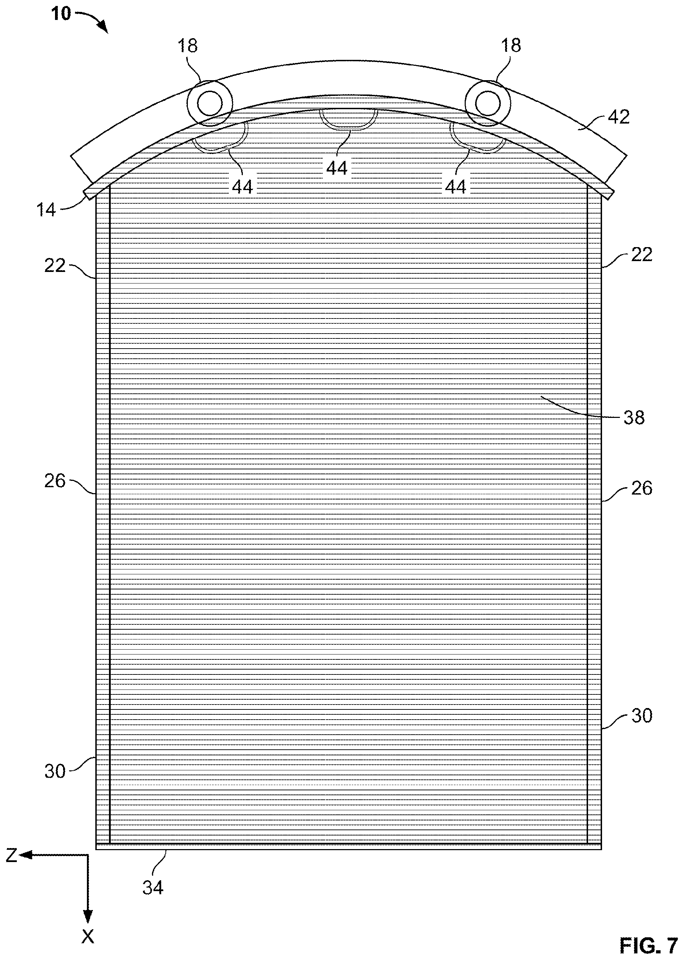

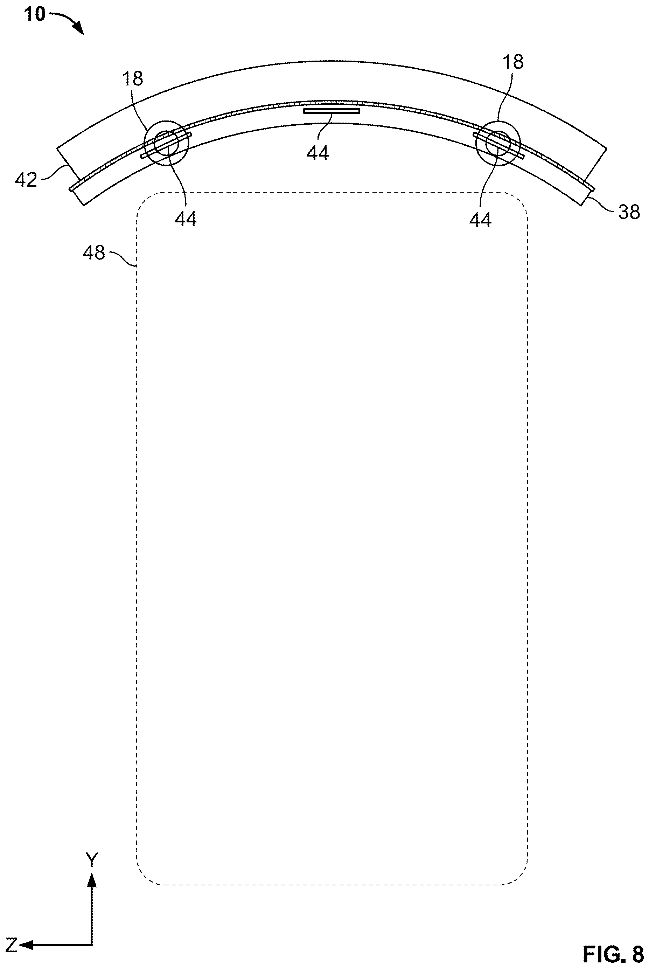

As shown in FIG. 7, the expanded position stretches the sheet 38 to have a large area projected onto an X-Z plane so the canopy 10 extends over a horizontal path approaching, orthogonally, a surface to which the brace 14 is mounted. Referring to FIGS. 6 and 8, the brace 14 and cross bar 34 are both wider than a door 46 under the canopy 10, so the canopy 10 in the extended position as shown in FIG. 8 prevents precipitation from entering the door 46.

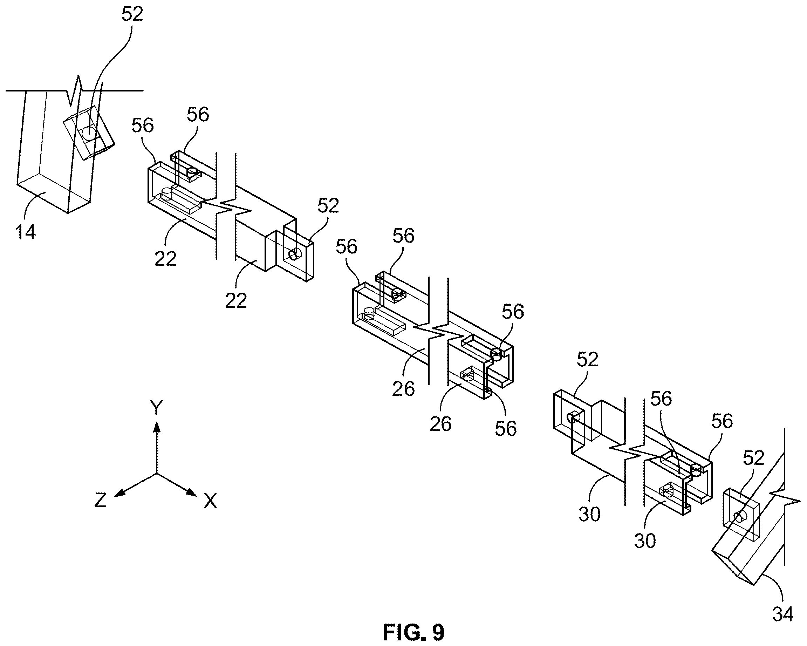

Turning to FIG. 9, the joints of the linkage of the illustrated example are each provided by a tab 52 disposed between a pair of flanges 56 on an adjacent link. The tabs 52 and flanges 56 each lay on the X-Y plane and connected by a cross pin (not illustrated) extending between each pair of flanges 56 and through a hole through each respective tab 52, so the hinges provided thereby each enable rotation about a respective axis extending in the Z direction. The brace 14 includes a tab 52 at either end extending distally therefrom, the cross bar 34 includes a tab 52 at either end extending proximally therefrom, the middle bar 26 has pairs of flanges 56 extending proximally and distally from its proximal and distal ends, respectively, the proximal bar 22 includes a pair of flanges 56 extending from its proximal end and a tab 52 extending from its distal end, and the distal bar 30 includes a pair of flanges extending from its distal end and a tab 52 extending from its proximal end. However, in other arrangements, the tabs 52 and flanges 56 may be distributed differently across the elements of the linkage, the tabs 52 and flanges 56 may extend on different planes to enable rotation on different axes, or the hinges may be provided by any other hinge mechanism.

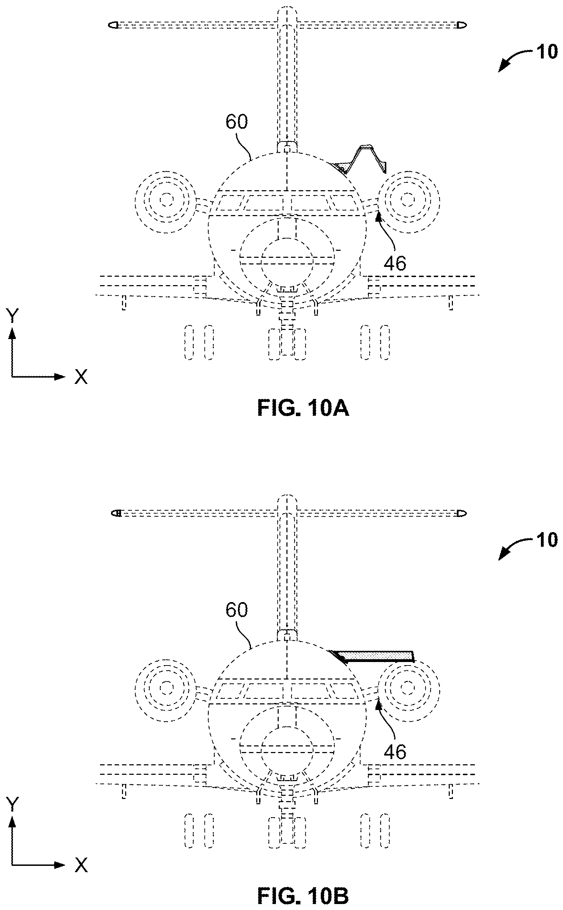

FIGS. 10A and 10B illustrate the canopy 10 mounted to a fuselage 60 of an aircraft. In FIG. 10A, the canopy 10 is shown in a partially extended configuration such as that shown in FIG. 3, and in FIG. 10B, the canopy 10 is shown in a fully extended configuration such as that shown in FIG. 4. As positioned, the canopy 10 prevents precipitation from entering the door 46 or reaching an individual entering or exiting the door. The canopy 10 can easily be reached from in front of the door 46 for removal and storage as well. The illustrated mounting of the canopy 10 to the fuselage 60 is merely an example, and it should be understood that the canopy 10 can be mounted above the entryway to a structure or above the door to another type of vehicle in much the same manner to achieve similar results.

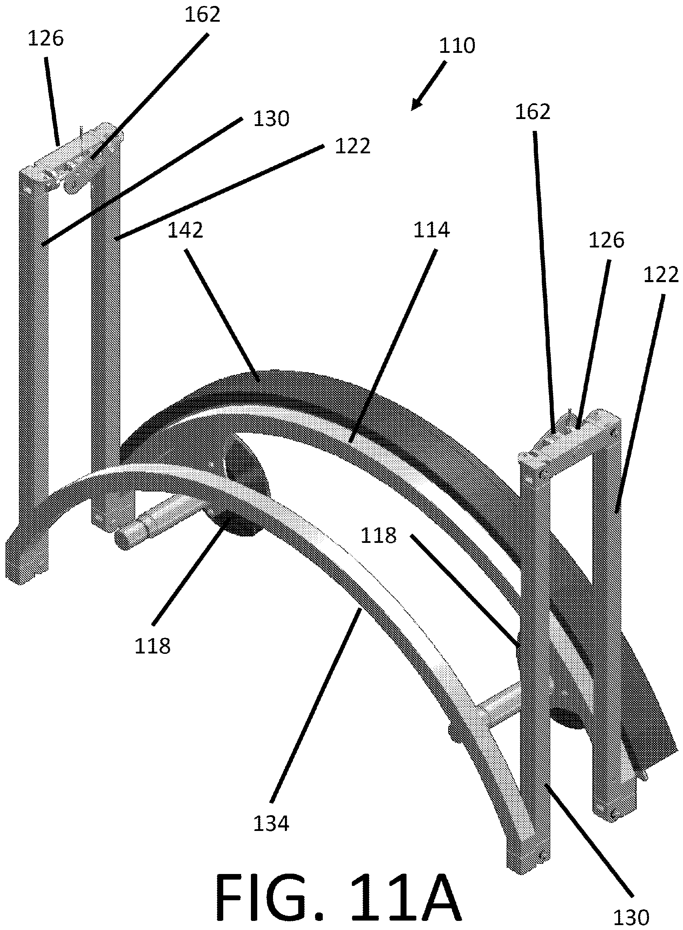

FIGS. 11A-11C show a canopy frame 110 according to another aspect of the disclosure. The canopy frame 110 is generally alike to the frame of the canopy 10 described above except for differences illustrated in the figures or noted explicitly below. As such, like numerals refer to like elements, meaning that brace 114 is generally alike to brace 14, mounting features 118 are similar to mounting features 18, proximal bars 122 are generally alike to proximal bars 22, cross bar 134 is generally alike to cross bar 34, weather guard 142 is generally alike to weather guard 42, and so on. Though the canopy frame 110 is illustrated without a sheet 38, a sheet 38 can be attached to the canopy frame 110 of FIGS. 11A-11C in the same ways illustrated and described above with regard to attachment of the sheet 38 to the canopy 10 of FIGS. 1-10B. The individual differences between the canopy frame 110 and the frame of the canopy 10 are generally independent from one another, meaning canopy frames according to the present disclosure can be constructed to include some features unique to frame 110 and some features unique to the frame of canopy 10.

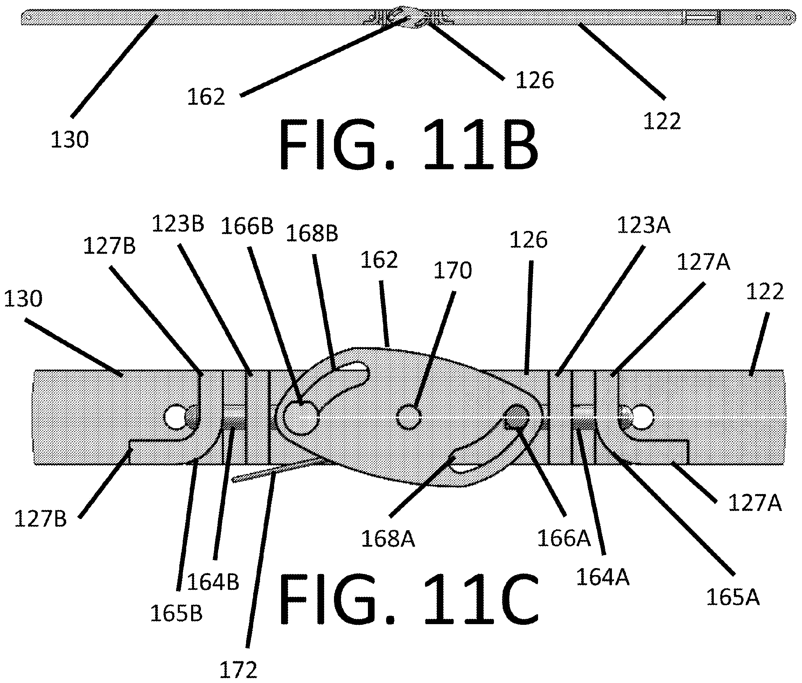

Turning to FIGS. 11B and 11C, with continued reference to FIG. 11A, the canopy frame 110 includes two arms that are each formed by a proximal bar 122, a middle bar 126, a distal bar 130 connected in sequence, and each arm is provided with a locking mechanism. The locking mechanism of each arm includes a cam 162 pivotally connected to the respective middle bar 126. The cam 162 includes a proximal track 168A and a distal track 168B. A head 166A of a proximal pin 164A is trapped in the proximal track 168A, and a head 166B of a distal pin 164B is trapped in the distal track 168B. A shank of the proximal pin 164A is in turn trapped in a proximal collar 123A fixed to the middle bar 126, and a shank of the distal pin 164B is trapped in a distal collar 123B fixed to the middle bar 126. The cam 162 is rotatable about a pivot point 170, which may be defined by a pin, bolt, or other projection, for example, extending from the middle bar 126.

The cam 162, pivot point 170, tracks 168A, 168B, collars 123A, 123B, and pins 164A, 164B are respectively arranged such that rotation of the cam 162 causes the pins 164A, 164B to simultaneously move between a locked configuration illustrated in FIG. 11C, wherein the shank of the proximal pin 164A extends into a proximal hoop 127A that is fixed to the proximal bar 122 and the shank of the distal pin 127B extends into a distal hoop 165B that is fixed to the distal bar 130, and an unlocked configuration wherein the pins 164A, 164B are drawn radially nearer to the pivot point 170 and do not extend into the hoops 127A, 127B. The illustrated arrangement is only one example of a locking system according to this principle, and canopy frames 110 according to other examples may have pins 164A, 164B arranged to translate other than radially relative to the pivot point 170 or that rotate into and out of engagement with their respective hoops 127A, 127B.

When the locking system is in the locked configuration such that each of the pins 164A, 164B extends through a respective collar 123A, 123B into a respective hoop 127A, 127B, the bars 122, 126, 130 of the respective arm are prevented from pivoting relative to one another so that the canopy frame 110 overall is prevented from transitioning between its folded and extended configurations. When the locking system is in the unlocked configuration such that each of the pins 164A, 164B is free of the respective hoops 127A, 127B, the bars 122, 126, 130 may pivot relative to one another so that the canopy 110 may transition between the folded and extended configurations.

In the illustrated example, two proximal hoops 127A are fixed to the proximal bar 122 normal to one another and two distal hoops 127B are fixed to the distal bar 130 normal to one another. The pins 164A, 164B can lock into either pair of one of the proximal hoops 127A and one of the distal hoops 127B to lock the arms of the canopy frame 110 in either the folded configuration shown in FIG. 11A or the extended configuration shown in FIG. 11B. In other examples, there may be only one proximal hoop 127A and one distal hoop 127B so that the canopy frame 110 can only be locked in either the folded configuration or the extended configuration. In yet further examples, the two proximal hoops 127A may not be normal to one another and the two distal hoops 127B may not be normal to one another. The angles between the two hoops 127A, 127B affixed to the same bar 122, 130 define the angular differences between the folded configuration and the extended configuration.

A proximal ramp 165A provides a transition surface between the proximal hoops 127A and a distal ramp 165B provides a transition surface between the distal hoops 127B. The ends of the pins 164A, 164B can ride along the respective ramps 165A, 165B as the canopy frame 110 transitions between the folded configuration and the extended configuration.

The locking mechanism may optionally include a resilient spring 172 or other biasing feature configured to bias the cam 162 to push the pins 164A, 164B into the locked configuration. In the illustrated example, an end of the spring 172 is angularly fixed relative to the cam 162, so turning the cam 162 away from the locked configuration so that the free end of the spring 172 is pressed against the distal collar 123B and bends further from its resting shape with increasing distance from the locked configuration. The spring's 172 resilient tendency to return to its rest configuration therefore biases the cam 162 back to the locked configuration. In various other examples, the spring 172 may instead be positioned to press against any other feature that is fixed relative to the middle bar 126, there m

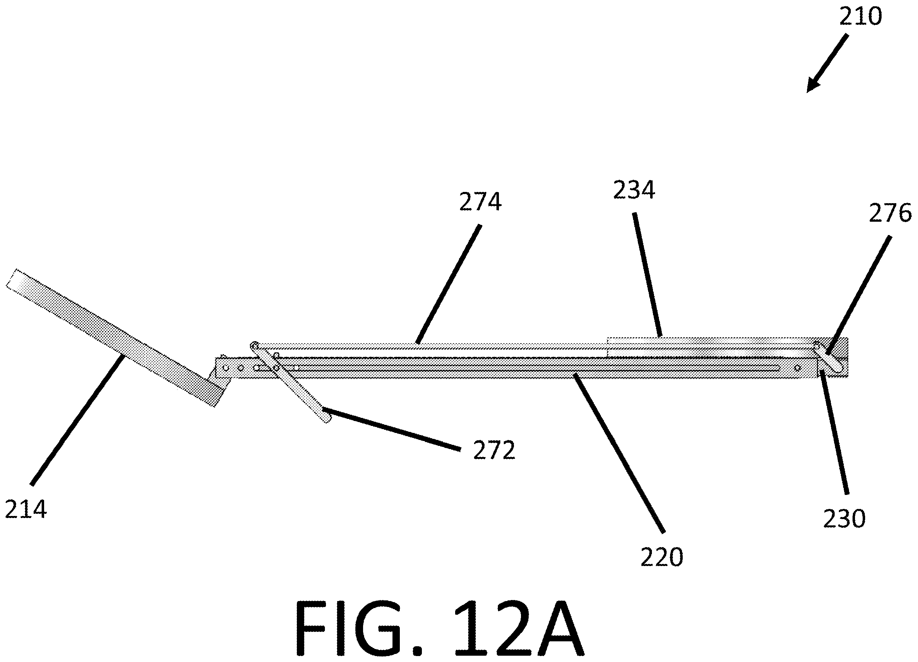

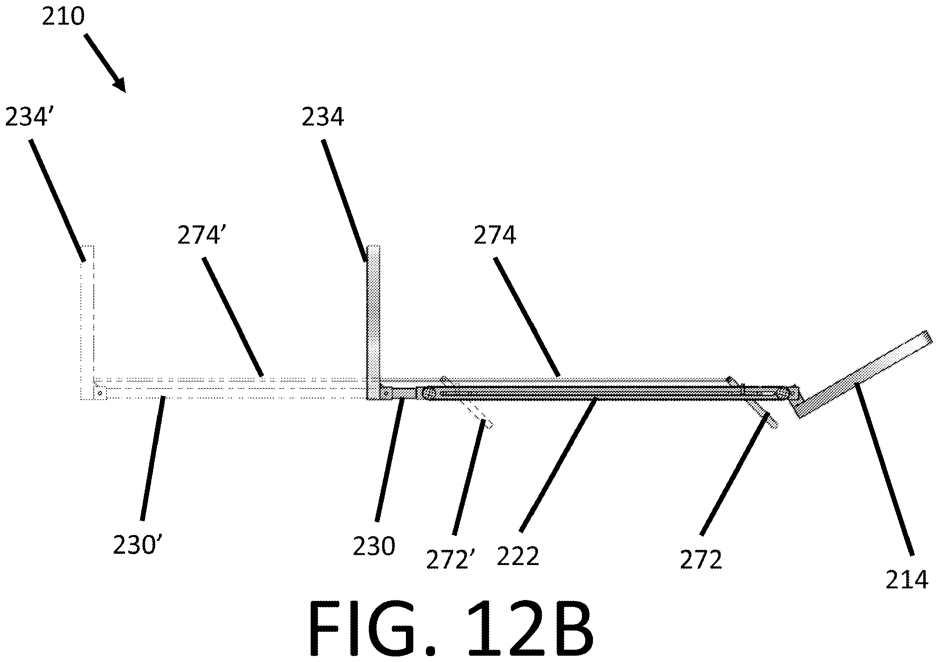

FIGS. 12A and 12B illustrate a canopy frame 210 according to another aspect of the disclosure. The canopy frame 210 is generally alike to the foregoing canopy frames 10, 110 except for illustrated or explicitly stated differences. As such, like numerals correspond to like features so that brace 214 is generally alike to braces 14, 114, and so on. The canopy frame 210 is illustrated without a sheet 38, a weather guard 42, 142, or mounting features 18, 118, but a sheet, a weather guard, and mounting features, individually or in any combination, can be attached to the canopy frame 210 in the same manner as illustrated and described above with respect to the frame of the canopy 10 or the canopy frame 110.

Unlike the frames of the preceding examples 10, 110, the two arms of the canopy frame 210 are each provided by a telescopically arranged proximal bar 222 and distal bar 230. In the illustrated example, the distal bar 230 of each arm is telescopically received in the respective proximal bar 222. In other arrangements, the proximal bar 222 could instead be telescopically received in the distal bar 230, for example, and each arm could include any number of telescopically arranged bars or tubes.

A proximal lever 272 and a distal lever 276 are each rotatably coupled to the distal bar 230, with the distal lever 276 being located and coupled distally of the proximal lever 272. The proximal lever 272 is coupled to the distal bar 230 through a slot 222 running lengthwise along the proximal bar 222 so that the proximal lever 272 can translate follow the distal bar 230 as the distal bar 230 telescopes in or out of the proximal bar 222. A rod 274 is connected to both the proximal lever 272 and the distal lever 274. The rod 274 is connected to the levers 272, 276 at respective locations that are spaced from the respective points where the levers 272, 276 are coupled to the distal bar 230. Rotating either lever 272, 276 therefore causes the other lever 272, 276 to rotate. The distal lever 276 is angularly fixed relative to the cross bar 234, so rotating the proximal lever 272 can cause the cross bar 234 to pivot between the lowered position shown in FIG. 12A and the raised position shown in FIG. 12B.

The canopy frame 210 is illustrated from opposite sides if FIGS 12A and 12B, showing that only one arm of the canopy frame 210 is provided with levers 272, 276 and a rod 274 in the illustrated example. The distal lever 276 is therefore obscured in FIG. 12B. However, in other examples, either or both arms may be provided with levers 272, 276 and a rod 274.

In FIG. 12B, a fully extended configuration is shown in dashed lines. The dashed depictions of the proximal lever 272', the rod 274', the distal bar 230', and the cross bar 234' are the locations of those features when the distal bar 230 is telescopically extended to the greatest possible distance out of the proximal bar 222 to reach the fully extended configuration of the canopy frame 210.

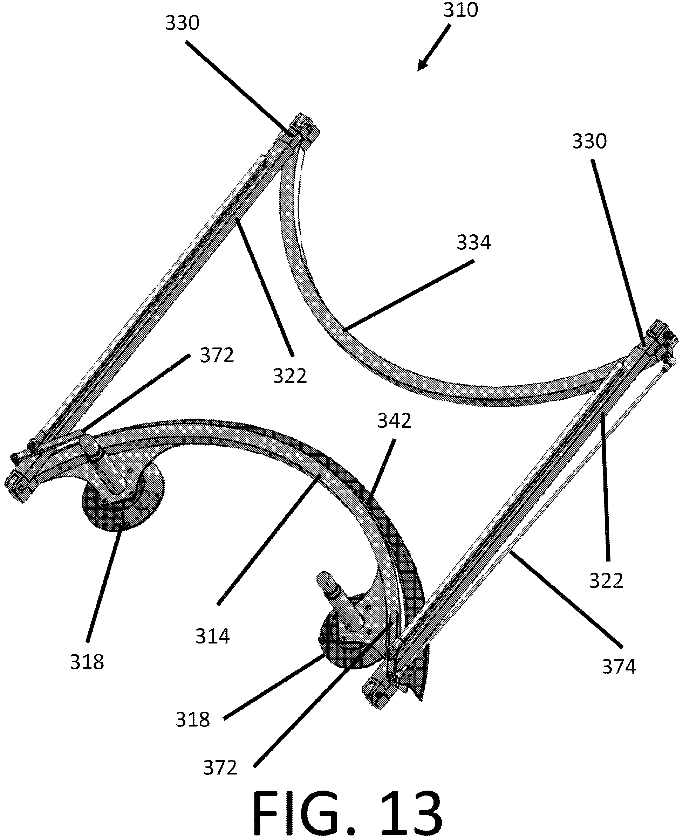

FIG. 13 illustrates a canopy frame 310 according to another aspect of the disclosure in a fully folded configuration. The canopy frame 310 is alike to the canopy frame 210 in all respects except for specifically illustrated or stated differences. The angular and spatial relationships between the brace 314, proximal bar 322, distal bar 330, and cross bar 334 depicted in FIG. 13 are therefore the same as the angular relationships that would exist between the brace 213, proximal bar 222, distal bar 230, and cross bar 234 when the canopy frame 210 is placed in its fully folded configuration, which is not specifically illustrated. Similarly, extending the canopy frame 310 from the fully folded configuration shown in FIG. 13 to its fully extended configuration, which is not specifically illustrated, would cause the brace 314, proximal bar 322, distal bar 330, and cross bar 334 to pass through the same series of angular and spatial positions relative to one another as those of brace 214, proximal bar 222, distal bar 230, and cross bar 234 shown in the progressive extension of canopy frame 210 depicted in FIGS. 12A and 12B. Moreover, the canopy frame 210 can be provided with mounting features and a weather guard alike to the mounting features 314 and weather guard 342 of the canopy frame 310 shown in FIG. 13.

Canopy frame 310 differs from canopy frame 210 in the arrangement of its levers 372 and rods 374. A proximal lever 372 and rod 374 are provided for each arm in the illustrated example, though in other arrangements only one arm may be provided with a proximal lever 372 and a rod 374. Each rod 374 is connected at one end to a respective proximal lever 372 and at another end to the cross bar 334 at a location that is spaced from an axis about which the cross bar 334 pivots relative to the distal bars 330. Rotating the proximal levers 372 therefore causes the rod 374 to pull or push the cross bar 334 so that the cross bar 334 rotates relative to the distal bars 330.

In the illustrated example, each proximal lever 372 is arranged to be rotatable relative to the respective distal bar 330 to which it is coupled about a respective axis that is normal to the axis about which the cross bar 334 rotates relative to the distal bars 330. To accommodate the different axes of rotation, each rod 374 is coupled to the cross bar 334 and the respective proximal lever 372 with a ball and socket joint.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A removable canopy (10) comprising:
a brace (14) having releasable mounting features;
a linkage extending from the brace (14) and convertible from a folded configuration to an extended configuration;
a cross bar (34) connected to the linkage so as to be nearer the brace (14) when the linkage is in the folded configuration than when the linkage is in the extended configuration; and
a sheet (38) connected to the cross bar (34) and the linkage so as to be folded when the linkage is in the folded configuration and extended when the linkage is in the extended configuration,
wherein the linkage comprises two arms, each connected to the brace (14) at one end,
wherein each arm comprises a proximal bar (22) connected to the brace (14) at one end,
a distal bar (30) rotatable relative to the proximal bar (22), and a middle bar (26) rotatably connected to both the proximal bar (22) and the distal bar (30), the distal bar being linked to the brace (14) through the middle bar (26) and the proximal bar (22).

2. The removable canopy (10) of claim 1, wherein the linkage comprises a free end, the free end being nearer to the brace (14) in the folded configuration than in the extended configuration.

3. The removable canopy (10) of claim 1, wherein the cross bar (34) extends between the two distal bars (30).

4. The removable canopy (10) of claim 3, wherein the sheet (38) is connected to the distal bars (30) and across a length of the cross bar (34) between the distal bars (30).

5. The removable canopy (10) of claim 4, wherein the sheet (38) is connected across a length of the brace (14) between the proximal bars (22) and both the brace and the cross bar (34) are arcuate in shape.

6. The removable canopy (10) of claim 5, comprising a weather strip extending along the brace (14), and wherein the brace (14) defines an arc projected on a first plane, and the weather strip has arcuate cross sections on radial planes extending through the center of the arc.

7. The removable canopy (10) of claim 5, wherein the extended configuration is defined at a position at which the sheet (38) is pulled taut between the brace and the cross bar (34).

8. The removable canopy (10) of claim 7, wherein a length of the sheet (38) between the brace (14) and the cross bar (34) prohibits the linkage from collapsing out of the extended configuration except toward the folded configuration.

9. The removable canopy (10) of claim 1, comprising a locking system coupled to either or both of the arms, the locking system including a cam pivotally connected to a respective one of the middle bars (26), two pins, and a proximal hoop fixed to the proximal bar (22) and a distal hoop fixed to the distal bar (30), wherein the pins are coupled to the cam such that rotation of the cam causes the pins to be either received in or withdrawn from the proximal and distal hoops.

10. The removable canopy (10) of claim 1, wherein the mounting features are releasable adhesive elements.

## Patentansprüche

1. Abnehmbare Überdachung (10), aufweisend:
eine Strebe (14) mit lösbaren Befestigungsmerkmalen;
ein Gestänge, das sich von der Strebe (14) erstreckt und von einer gefalteten Konfiguration in eine ausgefahrene Konfiguration umwandelbar ist;
eine Querstange (34), die mit dem Gestänge verbunden ist, um näher an der Strebe (14) zu sein, wenn sich das Gestänge in der gefalteten Konfiguration befindet, als wenn sich das Gestänge in der ausgefahrenen Konfiguration befindet; und
ein Tuch (38), das mit der Querstange (34) und dem Gestänge verbunden ist, um gefaltet zu werden, wenn sich das Gestänge in der gefalteten Konfiguration befindet, und ausgefahren zu werden, wenn sich das Gestänge in der ausgefahrenen Konfiguration befindet,
wobei das Gestänge zwei Arme aufweist, die jeweils an einem Ende mit der Strebe (14) verbunden sind,
wobei jeder Arm eine proximale Stange (22) aufweist, die an einem Ende mit der Strebe (14) verbunden ist,
eine distale Stange (30), die relativ zu der proximalen Stange (22) rotierbar ist, und eine mittlere Stange (26), die sowohl mit der proximalen Stange (22) als auch mit der distalen Stange (30) rotierbar verbunden ist, wobei die distale Stange durch die mittlere Stange (26) und die proximale Stange (22) mit der Strebe (14) verbunden ist.

2. Abnehmbare Überdachung (10) nach Anspruch 1, wobei das Gestänge ein freies Ende aufweist, wobei das freie Ende in der gefalteten Konfiguration näher an der Strebe (14) ist als in der ausgefahrenen Konfiguration.

3. Abnehmbare Überdachung (10) nach Anspruch 1, wobei sich die Querstange (34) zwischen den zwei distalen Stangen (30) erstreckt.

4. Abnehmbare Überdachung (10) nach Anspruch 3, wobei das Tuch (38) mit den distalen Stangen (30) und über eine Länge der Querstange (34) zwischen den distalen Stangen (30) verbunden ist.

5. Abnehmbare Überdachung (10) nach Anspruch 4, wobei das Tuch (38) über eine Länge der Strebe (14) zwischen den proximalen Stangen (22) verbunden ist und sowohl die Strebe als auch die Querstange (34) bogenförmig sind.

6. Abnehmbare Überdachung (10) nach Anspruch 5, aufweisend einen Dichtungsstreifen, der sich entlang der Strebe (14) erstreckt, und wobei die Strebe (14) einen Bogen definiert, der auf eine erste Ebene projiziert wird, und der Dichtungsstreifen bogenförmige Querschnitte auf radialen Ebenen aufweist, die sich durch die Mitte des Bogens erstrecken.

7. Abnehmbare Überdachung (10) nach Anspruch 5, wobei die ausgefahrene Konfiguration an einer Position definiert ist, an der das Tuch (38) zwischen der Strebe und der Querstange (34) straff gezogen wird.

8. Abnehmbare Überdachung (10) nach Anspruch 7, wobei eine Länge des Tuchs (38) zwischen der Strebe (14) und der Querstange (34) verhindert, dass das Gestänge aus der ausgefahrenen Konfiguration außer in Richtung der gefalteten Konfiguration zusammenfällt.

9. Abnehmbare Überdachung (10) nach Anspruch 1, aufweisend ein Verriegelungssystem, das mit einem oder beiden der Arme gekoppelt ist, wobei das Verriegelungssystem einen Nocken, der schwenkbar mit einer jeweiligen der mittleren Stangen (26) verbunden ist, zwei Stifte und einen proximalen Bügel, der an der proximalen Stange (22) befestigt ist, und einen distalen Bügel, der an der distalen Stange (30) befestigt ist, aufweist, wobei die Stifte mit dem Nocken gekoppelt sind, so dass eine Rotation des Nockens bewirkt, dass die Stifte entweder in dem proximalen und dem distalen Bügel aufgenommen werden oder aus diesen herausgezogen werden.

10. Abnehmbare Überdachung (10) nach Anspruch 1, wobei die Befestigungsmerkmale lösbare Klebeelemente sind.

## Revendications

1. Un auvent amovible (10) comprenant :
une entretoise (14) ayant des éléments de montage libérables ;
une tringlerie s'étendant à partir de l'entretoise (14) et convertible d'une configuration pliée à une configuration étendue ;
une barre transversale (34) reliée à la tringlerie de façon à être plus proche de l'entretoise (14) lorsque la tringlerie est dans la configuration pliée que lorsque la tringlerie est dans la configuration étendue ; et
une feuille (38) reliée à la barre transversale (34) et à la tringlerie de façon à être pliée lorsque la tringlerie est dans la configuration pliée et étendue lorsque la tringlerie est dans la configuration étendue,
dans lequel la tringlerie comprend deux bras, chacun relié à l'entretoise (14) à une extrémité,
dans lequel chaque bras comprend une barre proximale (22) reliée à l'entretoise (14) à une extrémité,
une barre distale (30) pouvant tourner par rapport à la barre proximale (22), et une barre médiane (26) reliée en rotation à la fois à la barre proximale (22) et à la barre distale (30), la barre distale étant reliée à l'entretoise (14) par l'intermédiaire de la barre médiane (26) et de la barre proximale (22).

2. L'auvent amovible (10) de la revendication 1, dans lequel la tringlerie comprend une extrémité libre, l'extrémité libre étant plus proche de l'entretoise (14) dans la configuration pliée que dans la configuration étendue.

3. L'auvent amovible (10) de la revendication 1, dans lequel la barre transversale (34) s'étend entre les deux barres distales (30).

4. L'auvent amovible (10) de la revendication 3, dans lequel la feuille (38) est reliée aux barres distales (30) et sur une longueur de la barre transversale (34) entre les barres distales (30).

5. L'auvent amovible (10) de la revendication 4, dans lequel la feuille (38) est reliée sur une longueur de l'entretoise (14) entre les barres proximales (22) et à la fois l'entretoise et la barre transversale (34) sont de forme arquée.

6. L'auvent amovible (10) de la revendication 5, comprenant une bande d'étanchéité s'étendant le long de l'entretoise (14), et dans lequel l'entretoise (14) définit un arc projeté sur un premier plan, et la bande d'étanchéité a des sections transversales arquées sur des plans radiaux s'étendant à travers le centre de l'arc.

7. L'auvent amovible (10) de la revendication 5, dans lequel la configuration étendue est définie à une position à laquelle la feuille (38) est tendue entre l'entretoise et la barre transversale (34).

8. L'auvent amovible (10) de la revendication 7, dans lequel une longueur de la feuille (38) entre l'entretoise (14) et la barre transversale (34) empêche la tringlerie de se replier hors de la configuration étendue sauf vers la configuration pliée.

9. L'auvent amovible (10) de la revendication 1, comprenant un système de verrouillage couplé à l'un ou l'autre des bras ou aux deux, le système de verrouillage comprenant une came reliée de manière pivotante à l'une respective des barres médianes (26), deux goupilles, et un arceau proximal fixé à la barre proximale (22) et un arceau distal fixé à la barre distale (30), dans lequel les goupilles sont couplées à la came de sorte que la rotation de la came amène les goupilles à être soit reçues dans les arceaux proximal et distal, soit retirées de ceux-ci.

10. L'auvent amovible (10) de la revendication 1, dans lequel les éléments de montage sont des éléments adhésifs libérables.
